(19) Europäisches Patentamt
European Patent Office
Office européen des brevets

(11) **EP 2 875 320 B1**

(12) **FASCICULE DE BREVET EUROPEEN**

(45) Date de publication et mention de la délivrance du brevet:
**14.08.2019 Bulletin 2019/33**

(21) Numéro de dépôt: **13747469.8**

(22) Date de dépôt: **19.07.2013**

(51) Int Cl.:
*G01G 3/14* *(2006.01)*    *G01G 19/44* *(2006.01)*

(86) Numéro de dépôt international:
**PCT/FR2013/051754**

(87) Numéro de publication internationale:
**WO 2014/013208 (23.01.2014 Gazette 2014/04)**

(54) **DISPOSITIF ET PROCEDE DE PESAGE**

WIEGEVORRICHTUNG UND -VERFAHREN

WEIGHING DEVICE AND METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2012 FR 1256995**

(43) Date de publication de la demande:
**27.05.2015 Bulletin 2015/22**

(73) Titulaire: **Withings**
**92130 Issy-les-Moulineaux (FR)**

(72) Inventeurs:
• **CARREEL, Eric**
**92190 Meudon (FR)**
• **BUARD, Nadine**
**92190 Meudon (FR)**
• **DEBREUIL, Xavier**
**92130 Issy Les Moulineaux (FR)**
• **TING, Victor**
**92130 Issy Les Moulineaux (FR)**
• **CAMPO, David**
**75015 Paris (FR)**
• **FAUSSARD, Guillaume**
**78770 Villiers-le-mahieu (FR)**
• **DUSANTER, Florent**
**92120 Montrouge (FR)**

(74) Mandataire: **Cabinet Plasseraud**
**66, rue de la Chaussée d'Antin**
**75440 Paris Cedex 09 (FR)**

(56) Documents cités:
**US-A- 3 906 931    US-A- 4 573 542**

EP 2 875 320 B1

**Description**

La présente invention est relative aux dispositifs et procédés de pesage.

Plus particulièrement, l'invention concerne le domaine des pèse-personnes électroniques. Ces appareils sont très souvent équipés de quatre pieds, chacun de ces pieds étant équipé d'une jauge de contrainte. Il est connu dans l'art antérieur d'agencer chacune desdites jauges de contrainte dans un montage de type pont de wheatstone spécifique et d'effectuer une somme des valeurs digitalisées lues sur les sorties des ponts de wheatstone, comme par exemple du document US5724267. Le coût de cette solution est élevé.

Le document US 3,906,931 divulgue un dispositif prévu pour indiquer la stabilité ou l'instabilité de posture d'un individu dans le sens avant arrière (axe X) et dans le sens gauche droite (axe Y).

De plus, il est également connu de multiplexer la lecture des ponts de wheatstone; mais le coût de cette variante est également élevé.

En outre, il est également connu d'indiquer à l'utilisateur au moyen d'indicateurs ou de flèches sur un afficheur que son poids n'est pas disposé de façon suffisamment centrée sur le dispositif de pesage, ce qui est une fonction utile pour améliorer la précision de pesage.

Il est apparu un besoin de diminuer le coût de tels dispositifs de pesage tout en maintenant toute ou partie de la fonction d'indication de décentrage de l'utilisateur sur la balance par des flèches.

A cet effet, l'invention propose notamment un dispositif de pesage comprenant quatre pieds, le pied antérieur gauche comprenant une jauge de contrainte antérieure gauche, le pied antérieur droit comprenant une jauge de contrainte antérieure droite, le pied postérieur gauche comprenant une jauge de contrainte postérieure gauche et le pied postérieur droit comprenant une jauge de contrainte postérieure droite, le dispositif de pesage comprenant en outre une unité de commande électronique et un afficheur, les jauges de contrainte antérieure droite et postérieure droite étant combinées dans un premier montage de type pont de wheatstone avec une première sortie issue d'un premier amplificateur, et les jauges de contrainte antérieure gauche et postérieure gauche étant arrangées dans un second montage de type pont de wheatstone présentant une seconde sortie issue d'un second amplificateur, les première et deuxième sorties étant raccordées à l'unité de commande électronique pour être numérisées et additionnées et pour en déduire ainsi le poids d'un objet présent sur le dispositif.

Grâce à ces dispositions, on utilise seulement deux ponts de wheatstone pour effectuer la pesée. De plus, il est possible de reconnaître un décentrage droite-gauche en comparant les deux sorties numérisées et d'indiquer ce décentrage à l'utilisateur.

Selon un autre aspect de la présente invention, il est proposé un dispositif de pesage tel que celui décrit ci-dessus et dans lequel chaque montage de type pont de wheatstone comprend une première branche comprenant deux premières résistances en série entre une tension de référence Vs et un potentiel de masse avec un premier point intermédiaire entre les deux dites premières résistances, et une seconde branche comprenant deux deuxièmes résistances en série entre la tension de référence et le potentiel de masse avec un second point intermédiaire entre les deux dites deuxièmes résistances, les premier et second points intermédiaires étant reliés à l'amplificateur correspondant, l'un des premier ou second points intermédiaires pouvant être en outre relié sélectivement via un commutateur à une source de tension intermédiaire, de sorte que lorsque le commutateur est activé, la différence de tension lue sur entre les premier et second points intermédiaires est représentative d'un déséquilibre avant-arrière.

Grâce à ces dispositions, on utilise seulement deux ponts de wheatstone pour effectuer la pesée et de plus, il est possible de reconnaître un décentrage droite-gauche et un décentrage avant-arrière et d'indiquer à l'utilisateur un tel décentrage au moyen d'une flèche de coin parmi quatre flèches de coin, afin que l'utilisateur se repositionne.

Dans des modes de réalisation du procédé selon l'invention, on peut éventuellement avoir recours en outre à l'une et/ou à l'autre des dispositions qui suivent.

Selon un aspect avantageux, les deux premières résistances de chaque montage de type pont de wheatstone comprennent une première résistance de jauge avant agencée entre le potentiel de masse et le premier point intermédiaire et la deuxième résistance de jauge avant agencée entre le premier point intermédiaire et la tension de référence Vs, les deux deuxièmes résistances de chaque montage de type pont de wheatstone comprennent une première résistance de jauge arrière agencée entre le potentiel de masse et le second point intermédiaire et une deuxième résistance de jauge arrière agencée entre le second point intermédiaire et la tension de référence, la première résistance de jauge avant et la première résistance de jauge arrière croissant avec la charge alors que la deuxième résistance de jauge avant et la deuxième résistance de jauge arrière décroissent avec la charge. Grâce à quoi la sensibilité de la chaine de mesure est optimisée et une éventuelle dérive en température peut être compensée

Selon un autre aspect avantageux, l'unité de commande électronique peut être configurée pour afficher au moins une indication de décentrage sur l'afficheur ; de sorte que l'utilisateur est incité à mieux se positionner sur le pèse-personne ; une telle indication peut se limiter à indiquer un décentrage gauche-droit ou peut être plus précise.

Selon un autre aspect avantageux, l'écran d'affichage peut inclure quatre flèches de coin correspondant respectivement aux quatre pieds du dispositif, une des quatre flèches pouvant être affichée en cas de décentrage substantiel en direction d'un coin.

Moyennant quoi, on obtient ainsi une solution simple et ergonomique pour indiquer à l'utilisateur un décentrage sur le pèse-personne.

Selon un autre aspect avantageux, la tension intermédiaire est la moitié de la tension de référence Vs ; de sorte que l'on travaille dans une zone optimale pour la linéarité de la réponse.

Par ailleurs, l'invention concerne également un procédé mis en oeuvre dans un dispositif de pesage tel que décrit ci-dessus, le procédé comprenant au moins les étapes :

> **a-** une étape de calibration au cours de laquelle on enregistre une première série de paramètres P1 pour une pluralité de poids de référence posés successivement sur le dispositif de pesage, et une seconde série de paramètres pour la pluralité de poids de référence posés successivement sur le dispositif de pesage, avec le commutateur activé le premier point intermédiaire étant relié à la source de tension intermédiaire,
> **b1-** une étape de pesée au cours de laquelle on mesure, les commutateur étant ouverts, les première et deuxième sorties et on corrige leur somme numérisée obtenue au moyen de la première série de paramètres, pour obtenir un poids estimé,
> **b2-** une étape d'évaluation de décentrage au cours de laquelle on active le commutateur et compare la somme des première et deuxième sorties à un point de la deuxième série de paramètres correspondant au poids estimé, pour identifier un décentrage, et l'indiquer à l'utilisateur,
> **c-** on répète les étapes b1- et b2-.

Grâce à quoi, on peut identifier un décentrage et l'indiquer à l'utilisateur, au moyen des valeurs de calibration, en utilisant un circuit électronique peu complexe.

Dans des modes de réalisation du procédé selon l'invention, on peut éventuellement avoir recours en outre à l'une et/ou à l'autre des dispositions suivantes qui suivent.

Selon un autre aspect avantageux, on stoppe l'itération des étapes b1- et b2- lorsque l'évaluation du décentrage est inférieur à un seuil prédéterminé pendant au moins une période prédéterminée, puis on affiche le poids estimé en résultant sur l'afficheur. Moyennant quoi la convergence de la mesure de poids est déterminée.

Selon un autre aspect avantageux, l'afficheur peut comporter des flèches de coin, et on peut identifier un décentrage gauche-droit en comparant les premiers et deuxième sorties à l'étape b-, et on peut identifier un décentrage avant-arrière en comparant la somme des première et deuxième sorties à la deuxième série de paramètres à l'étape c-, afin de déterminer s'il y a lieu d'afficher une flèche de coin correspondant à la jauge de contrainte la plus chargée. De sorte qu'il est possible d'afficher pour l'utilisateur une indication claire et concise.

Selon un autre aspect avantageux, on peut utiliser un décentrage gauche-droit pour permettre à l'utilisateur de sélectionner un élément affiché sur l'afficheur. Moyennant quoi, ce décentrage gauche-droit peut être intégré dans les fonctions de l'interface utilisateur.

Selon un autre aspect avantageux, on peut afficher sur l'afficheur le poids mesuré en fonction de la somme des première et deuxième sorties et d'une correction au moyen de la première série de paramètres ; de sorte qu'une correction de gain de la chaîne de mesure peut être effectuée.

Selon un autre aspect avantageux, le procédé peut comprendre en outre :

b0- une étape de tare au cours de laquelle on effectue une mesure de tare avec aucun objet posé sur le dispositif et on compense une mesure ultérieure par un décalage (ou 'offset') correspondant à la mesure de tare.

D'autres caractéristiques et avantages de l'invention apparaîtront au cours de la description suivante d'une de ses formes de réalisation, donnée à titre d'exemple non limitatif, en regard des dessins joints.

Sur les dessins :

- la figure 1 est une vue générale du dispositif de pesage, vue de dessus, selon l'invention,
- la figure 2 montre un affichage sur un afficheur du dispositif de pesage de la figure 1,
- la figure 3 montre un schéma électrique de principe du dispositif de pesage de la figure 1, et
- la figure 4 montre une courbe représentative de l'étape de calibration du dispositif de pesage de la figure 1.

Sur les différentes figures, les mêmes références désignent des éléments identiques ou similaires.

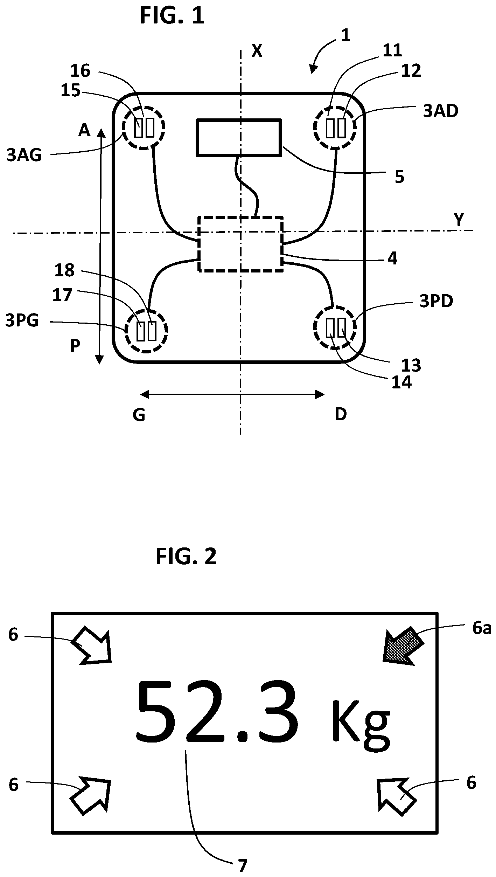

La figure 1 représente un exemple de dispositif de pesage selon une forme de réalisation de l'invention.

Ce dispositif de pesage se présente, dans l'exemple illustré, comme un pèse-personne électronique **1** sur lequel peut se placer un utilisateur pour mesurer notamment son poids.

Le pèse-personne électronique **1** comprend un corps principal de forme générale rectangulaire ou carrée et quatre pieds disposés respectivement au voisinage des quatre coins du corps, chaque pied comprenant des moyens de mesure.

Plus précisément, le pied antérieur gauche comprend une jauge de contrainte antérieure gauche **3AG**, le pied antérieur droit comprend une jauge de contrainte antérieure droite **3AD**, le pied postérieur gauche comprend une jauge de contrainte postérieure gauche **3PG** et le pied postérieur droit comprend une jauge de contrainte postérieure droite **3PD**.

Sur la figure 1, la direction antéro-postérieure est référencée par l'axe **X**, la lettre **A** désignant l'avant et la lettre **P** désignant l'arrière, alors que la direction droite-gauche est référencée par l'axe **Y**, s'étendant entre le côté gauche dénoté **G** et le côté droite dénoté **D**.

Le pèse-personne électronique **1** comprend en outre une unité de commande électronique **4** et un afficheur **5** dont il sera question plus en détail plus loin.

S'agissant des jauges de contrainte déjà mentionnées, on choisira de préférence des jauges extensiométriques doubles du type connu, en particulier des jauges comprenant un premier élément dont la résistance augmente sous l'effet d'une compression verticale appliquée au pied considéré et un deuxième élément dont la résistance diminue sous l'effet de ladite compression verticale. Cependant, l'utilisation de jauges extensiométriques comprenant un seul élément sensible à la contrainte verticale n'est pas exclue.

Dans l'exemple illustré ici, la jauge de contrainte antérieure droite **3AD** comprend un tel premier élément **11** appelé première résistance de jauge avant droite 11, et un tel deuxième élément appelé deuxième résistance de jauge avant droite **12.**

De façon analogue, la jauge de contrainte postérieure droite **3PD** comprend un tel premier élément appelé première résistance de jauge arrière droite **13**, et un tel deuxième élément appelé deuxième résistance de jauge arrière droite **14**.

De même pour le côté gauche, la jauge de contrainte antérieure gauche **3AG** comprend un tel premier élément **15** appelé première résistance de jauge avant gauche 15, et un tel deuxième élément appelé deuxième résistance de jauge avant gauche **16**.

Enfin, la jauge de contrainte postérieure gauche **3PG** comprend un tel premier élément **17** appelé première résistance de jauge arrière gauche 17, et un tel deuxième élément appelé deuxième résistance de jauge arrière gauche **18**.

Chacune des résistances **11-18** présente respectivement une valeur de résistance notée **R1-R8.** Dans l'exemple illustré ici, les résistances impaires augmentent avec l'effort vertical de compression appliqué sur les pieds, alors qu'à l'inverse les résistances paires diminuent avec l'effort appliqué.

Dans un exemple type, on choisit les quatre résistances du pont avec la même valeur nominale par exemple 500 ohms ou 1 kilo ohms (1 kΩ).

Comme représenté sur la figure 2, l'afficheur **5** comprend une zone centrale dans laquelle peut être affiché le poids estimé **7** pour l'objet ou la personne présente sur le pèse-personne **1**. De plus, dans la zone périphérique autour de ladite zone centrale, peuvent être affichés un ou plusieurs indicateurs de décentrage **6**. En l'occurrence ici, l'affichage comprend quatre indications graphiques qui seront appelées dans la suite de la présente description 'flèches de coin'. La fonction de ces indicateurs est d'indiquer à l'utilisateur présent sur le pèse-personne qu'il existe un décentrage de position par rapport à une position idéale centrée pour laquelle les efforts sont substantiellement équitablement répartis sur les quatre pieds du pèse-personne.

C'est en effet dans une position bien centrée que la mesure de poids et la plus précise.

Dans l'exemple illustré, avec quatre flèches de coin, on pourra activer une seule flèche **6a** pour indiquer à l'utilisateur la direction à suivre pour corriger le décentrage constaté. L'activation d'une flèche peut consister à la faire clignoter, l'allumer alors que les autres restent éteintes, ou toute autre manière.

Il est à noter que l'on pourrait avoir que deux flèches d'indication pour indiquer à l'utilisateur un décentrage avant-arrière ou bien un décentrage gauche-droite.

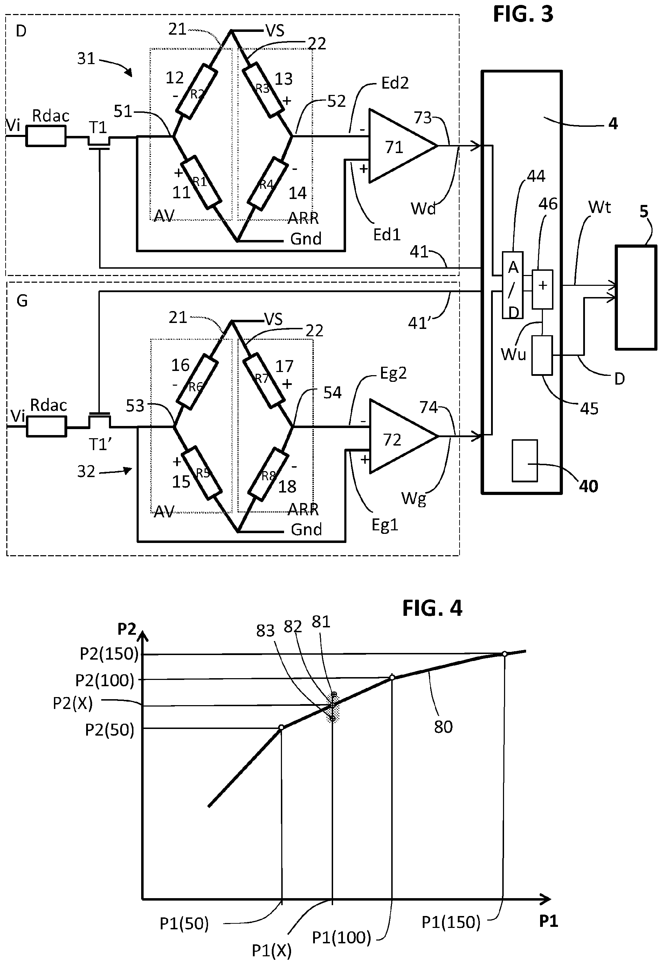

En se tournant vers la figure 3, le schéma électrique de principe du pèse-personne comprend, pour le côté droit, un premier montage de type pont de wheatstone **31**, qui combine les résistances **11-14** des jauges de contrainte antérieure droite et postérieure droite.

Plus précisément, le premier montage de type pont de wheatstone **31** comprend d'une part une première branche **21** comprenant les deux résistances de jauge avant (11,12) montées en série entre une tension de référence **Vs** et un potentiel de masse ('Gnd') avec un premier point intermédiaire **51** interposé entre les deux résistances et d'autre part une deuxième branche **22** comprenant les deux résistances de jauge arrière (13,14) montées en série entre la tension de référence Vs et le potentiel de masse avec un second point intermédiaire **52** interposé entre les deux deuxièmes résistances.

La tension de référence **Vs** est issue d'une source de tension stabilisée à une valeur prédéterminée constante par exemple 2,8 V dans l'exemple considéré ; cette tension de référence Vs sera également utilisée pour les opérations de conversion analogique-digital.

On prélève les tensions respectives présentes sur les premier et second points intermédiaires **51,52**, en s'intéressant particulièrement à la différence de potentiel entre ces deux points intermédiaires comme il sera vu plus loin.

Plus précisément, les premier et second points intermédiaires sont reliés à un premier amplificateur **71**, dont le rôle est d'amplifier la différence de potentiel entre les deux points intermédiaires **51,52**, et de délivrer ces valeurs amplifiées sur une première sortie **73** reliée à l'unité de commande **4**.

Par ailleurs, le premier point intermédiaire **51** est relié à un circuit auxiliaire comprenant un commutateur **T1**, une résistance **Rdac** et une source de tension intermédiaire **Vi**. Grâce à ce circuit auxiliaire, le premier point intermédiaire 51 peut être sélectivement couplé, via le commutateur **T1** à la tension intermédiaire **Vi**. Lorsque le commutateur T1 est ouvert (on dit aussi 'au repos' ou 'OFF'), l'impédance de ce circuit auxiliaire est infinie, alors que lorsque le commutateur **T1** est activé, la tension prévalant au niveau du premier point intermédiaire 51 est 'tirée' vers la tension intermédiaire **Vi** au travers de la résistance **Rdac.**

On choisira de préférence la tension intermédiaire Vi comme la moitié de la tension de référence Vs, afin de travailler dans une zone de linéarité optimale.

L'unité de commande **4** commande l'activation ou la désactivation du commutateur T1 au moyen d'une sortie et de la ligne de commande **41**.

La tension prélevée sur le premier point intermédiaire **51** est notée **Ed1**, la tension prélevée sur le second point intermédiaire **52** est notée **Ed2**, la tension prélevée sur le première sortie **73** de l'amplificateur 71 est notée **Wd.**

On a alors l'équation **Wd = G (Ed1-Ed2)**, G étant le gain de l'amplificateur 71. Les tensions Ed1 et Ed2 s'écrivent comme suit :

$$\text{Ed1} \;=\; \frac{Vi}{1+\dfrac{Rdac}{R2}+\dfrac{Rdac}{R1}} + \frac{Vs}{1+\dfrac{R2}{R1}+\dfrac{R2}{Rdac}}$$

$$\text{Ed2} \;=\; \frac{Vs}{1+\dfrac{R3}{R4}}$$

Si Rdac est infini, ce qui correspond au cas où T1 est ouvert, alors on obtient pour Ed1 :

$$\text{Ed1} \;=\; \frac{Vs}{1+\dfrac{R2}{R1}}$$

On choisit dans l'exemple illustré une valeur de 2,5 kΩ pour Rdac, mais bien sûr on pourrait choisir tout autre valeur y compris zéro sans sortir du cadre de la présente invention.

S'agissant du côté gauche, comme illustré sur la figure 3, le schéma électrique est tout à fait similaire et sa description ne sera pas répétée en entier ici. Le commutateur **T1'** joue le rôle du commutateur T1 commandé par la ligne **41'**; le second amplificateur **72** joue le rôle du premier amplificateur 71, et délivre une seconde sortie notée **74** analogue à la première sortie 73 mais qui concerne cette fois les mesures effectuées sur le côté gauche (au lieu de celles effectuées sur le côté droit). La tension prélevée sur le premier point intermédiaire **53** est ici notée **Eg1**, et la tension prélevée sur le second point intermédiaire **54** est ici notée **Eg2.**

On a alors, pour la tension résultante du côté gauche, l'équation **Wg = G (Eg1-Eg2)**, G étant le gain de l'amplificateur 72.

Dans l'unité de commande **4**, chacune de ces valeurs de tensions Wg,Wd est convertie dans un convertisseur analogique digital **44**, ce qui donne des valeurs numérisées **Num(Wg)** et **Num(Wd)**. Une simple comparaison de ces deux valeurs Num(Wg), Num(Wd) peut servir à identifier un décentrage gauche-droit et à l'indiquer à l'utilisateur, par exemple si la différence est supérieure à un seuil prédéterminé.

Il est à noter que les deux commutateur **T1,T1'** sont de préférence commandés simultanément au même état.

Dans une des phases de fonctionnement du pèse-personne électronique, on procède à l'estimation du poids total présent **Wt** sur le dispositif, en procédant dans l'unité de commande **4** à une addition des valeurs lues respectivement sur le côté droit et le côté gauche, suivant la formule :

$$\text{Wt} \;=\; \text{Num(Wg)} \;+\; \text{Num(Wd)}$$

Quand T1 et T1' sont OFF, la valeur numérique Wt correspond au poids mesuré qui est transmis à l'afficheur 5 pour y être affiché dans la zone centrale susmentionnée.

Lorsque les valeurs droite et gauche sont sensiblement différentes, alors il est possible de reconnaître un déséquilibre ou décentrage droite-gauche, et de l'indiquer le cas échéant à l'utilisateur du pèse-personne, par exemple au moyen de flèches de décentrage droite et gauche (non représenté aux figures).

Par ailleurs, lorsque les commutateurs T1 et T1' sont ouverts ('Off'), la mesure n'est pas influencée par les circuits auxiliaires des premier et deuxième montages 31,32 de type pont de wheatstone, et par conséquent on mesure directement le poids total **Wt** de l'objet ou la personne présente sur le pèse-personne.

Lorsque les commutateurs T1 et T1' sont ouverts, les tensions présentes sur les premier et deuxième points intermédiaires 51,52 évoluent de façon symétrique autour de la moitié de la tension de référence Vs.

En revanche, lorsque les commutateurs T1 et T1' sont fermés, c'est-à-dire activés, la mesure effectuée par chacun des premier et deuxième montages 31,32 est influencée par le potentiel intermédiaire Vi, on ne mesure plus directement le poids total de l'objet mais un indicateur appelé 'pseudo-poids' **Wu.** Celui-ci peut être représentatif d'un déséquilibre avant-arrière.

En effet, dans ce cas de figure, la première branche **21** du premier pont **31** a un comportement différent de la deuxième branche **22** ; les tensions présentes sur les premier et deuxième points intermédiaires 51,52 n'évoluent plus de façon symétrique autour de la moitié de **Vs** comme dans le cas les commutateurs sont ouverts, la tension présente sur le premier point intermédiaire 51 étant rappelée vers Vi par le circuit auxiliaire.

Comme il sera vu dans la suite, on comparera ce pseudo poids **Wu** à une valeur théorique conservée dans un espace mémoire **40** de l'unité de commande 4. En effet, la valeur de Wu est influencée par le centrage avant-arrière du poids posé sur le pèse-personne.

Toujours en référence à la figure 3, l'unité de commande 4 peut transmettre vers l'afficheur **5** des données **D** représentatives d'un état de décentrage, ceci afin d'afficher un ou plusieurs indicateurs de décentrage à destination de l'utilisateur, afin que celui-ci puisse corriger sa position et mieux se placer sur le pèse-personne.

Le procédé mis en oeuvre dans le pèse-personne va être décrit ci-après.

Tout d'abord, on procède à une étape préliminaire de calibration notée **a-**, qui peut par exemple être effectuée à la fin de la chaîne de fabrication du pèse-personne, ou un peu plus tard, mais de préférence avant la livraison au client final.

Au cours de cette étape de calibration, on pose tout d'abord un premier poids de référence par exemple un poids de 50 kg de manière bien centrée sur le pèse-personne ; dans ces conditions, on procède à une mesure du poids total **Wt** alors que les commutateurs T1,T1' sont ouverts. La valeur lue sur un afficheur P1 (50), par exemple 51,2 kg permet de connaître l'erreur de gain de la chaîne de mesure, et donc de connaître la correction à appliquer pour indiquer le poids exact. De plus, on procède à une mesure du pseudo poids **Wu** alors que les commutateurs T1,T1' sont fermés, ce qui donne une valeur de pseudo poids correspondant au poids de référence 50 kg, en position centrée, valeur notée P2(50).

On procède exactement de la même manière ensuite en posant un poids de référence de 100 kg de façon centrée, et on enregistre les valeurs de poids **Wt** et pseudo poids **Wu** correspondantes notées P1(100) et P2(100).

Selon l'exemple illustré, on procède encore de la même manière avec un poids de référence de 150 kg posé sur le pèse-personne de façon centrée et on enregistre les valeurs de poids **Wt** et pseudo poids **Wu** correspondantes notées P1(150) et P2(150).

Bien entendu, au lieu d'utiliser uniquement trois poids de référence, on pourrait utiliser plus de poids et obtenir un maillage plus fin du comportement de la chaîne de lecture.

On obtient ainsi une courbe de calibration, représentée à la figure 4, comportant une succession de points reliés par des segments, avec pour chacun point l'axe des abscisses portant une valeur P1(X) positionnée parmi une première série de paramètres P1 représentant le poids total et l'axe des ordonnées portant une valeur P2(X) positionnée parmi une seconde série de paramètres P2 représentant le pseudo poids.

Cette première et seconde séries de paramètres P1,P2 sont ensuite stockés dans un espace mémoire non volatile 40 de l'unité de commande 4.

Comme indiqué plus haut, la première série de paramètres **P1** permet de corriger la mesure du poids total Wt, concernant principalement les erreurs de gain de la chaine de mesure. Concernant la deuxième série de paramètres **P2**, celle-ci servira à déterminer un déséquilibre ou un décentrage avant-arrière comme il sera précisé plus loin.

Lorsqu'un utilisateur veut mesurer son poids grâce au pèse-personne électronique, il procède généralement à une étape de tarage notée **-b0** au cours de laquelle le poids total **Wt0** est mesuré en l'absence d'objet présent sur le pèse-personne électronique. Le poids total **Wt0** mesuré dans ces conditions constitue une valeur de tare qui sera retranchée poids total mesuré avec un utilisateur ou un objet placé sur le pèse-personne.

L'étape de tarage peut être nécessaire ou pas selon les événements précédents intervenus juste avant sur le pèse-personne électronique.

Concernant la méthode utilisée pendant le pesage de l'utilisateur, celle-ci comporte les deux sous étapes suivantes:

   b1- une étape de pesée au cours de laquelle on mesure, les commutateur T1,T1' étant ouverts, les première et deuxième sorties 73,74, on les numérise et on corrige leur somme numérisée obtenue au moyen de la première série de paramètres P1, pour obtenir un poids estimé corrigé; si il existe un décentrage, le poids estimé peut être légèrement différent du poids mesuré **Wt1** en cas d'absence de décentrage,

**b2-** une étape d'évaluation de décentrage au cours de laquelle on active les commutateurs T1,T1' et on compare la somme numérisée des première et deuxième sorties 73,74, à savoir le pseudo poids Wu à un point de la deuxième série de paramètres P2 correspondant au poids estimé Wt1, pour identifier un décentrage, et l'indiquer à l'utilisateur.

Il est à noter que, tant pour l'étape -b1 que pour l'étape -b2, on retire le poids de tare à la somme des première et deuxième valeurs numérisées 73,74.

Selon l'exemple illustré à la figure 4, à l'issue des étapes b1 et b2, on obtient comme résultat le point référencé **81**, qui se trouve à distance de la courbe **80**, et par conséquent est représentatif d'un décentrage, en l'occurrence ici vers l'arrière.

Selon le procédé, on itère les étapes b1 et b2 assez rapidement par exemple plusieurs fois à plusieurs dizaines de fois par seconde, et les points successifs obtenus **83** se déplacent dans le graphique de la figure 4 de part et d'autre de la courbe **80** en fonction de la direction du décentrage avant ou arrière, alors que Wt varie peu.

Lorsque l'utilisateur bouge pour corriger le décentrage, la valeur de poids total Wt varie faiblement, alors que le décentrage avant-arrière peut varier plus fortement, ce qui donne une trajectoire de points sur la figure 4 qui s'étend dans une zone de faible largeur et de plus grande hauteur.

Bien entendu, l'unité de commande **4** traite en temps réel les mesures reçues par les première et deuxième sorties **73,74** et adapte en temps réel l'affichage des indicateurs de décentrage.

Si l'utilisateur suit les consignes données par les indications de décentrage, alors la position des points successifs va converger vers une position sans décentrage, en l'occurrence le point **82** dans la figure 4.

Selon une étape optionnelle du procédé, il est prévu de stopper l'itération des étapes b1 et b2 dès lors que le décentrage avant arrière et le décentrage gauche droite sont inférieurs à des valeurs prédéterminées au moins pendant une période prédéterminée. Au cours de cette étape finale, on affiche le poids **Wt** et on fait cesser les indications de décentrage.

La figure 4 illustre la gestion du décentrage avant arrière, mais l'unité de commande 4 gère aussi le décentrage gauche-droite en comparant directement les valeurs **Wg**, **Wd** sans avoir besoin de se référer à une courbe de calibration. Dès lors que les deux valeurs Wg, Wd diffèrent de plus d'une quantité prédéterminée, alors un déséquilibre gauche-droite est identifié et peut-être notifié sur les indications de décentrage de l'afficheur.

Dans l'exemple de la figure 2, l'unité de commande **4** identifie un décentrage vers l'avant et un décentrage vers la droite et donc active la flèche avant droite 6a.

Il est à noter que deux flèches de coin pourraient être activées simultanément, ou bien on pourrait avoir huit flèches au lieu de quatre, réparties comme des points cardinaux ou directions cardinales.

Il est aussi possible de désactiver toutes les flèches de coin dès lors que les conditions de convergence sont atteintes.

Il est aussi à noter que les flèches de coin pourraient être remplacées par un indicateur graphique du type point mouvant sur cible, bulle d'air de niveau virtuel, ou tout autre artifice graphique au goût du jour.

Bien entendu, au lieu de relier le premier point intermédiaire 51 de la première branche 21 au commutateur T1 et au circuit auxiliaire, il est tout à fait possible de choisir de relier plutôt le second point intermédiaire 52 de la deuxième branche 22 au commutateur T1 et au circuit auxiliaire. Le fonctionnement serait similaire mutatis mutandis à ce qui a été décrit ci-dessus, et le procédé serait également similaire, aux valeurs de la deuxième série de paramètres P2 près.

Dans une variante (non représentée), on pourrait combiner les jauges de contrainte antérieure droite et antérieure gauche dans un premier montage de type pont de wheatstone (31) tel que décrit et on pourrait combiner les jauges de contrainte postérieure droite et postérieure gauche dans un second montage de type pont de wheatstone (32) tel que décrit. Alors, les valeurs Wd et Wg en sortie des amplificateurs correspondraient respectivement aux poids avant et arrière et on pourrait déterminer un décentrage avant-arrière en comparant simplement les valeurs des poids avant et arrière et l'indiquer à l'utilisateur si la différence est supérieure à un seuil prédéterminé.

## Revendications

1.   Dispositif de pesage de type pèse-personne électronique (1) comprenant quatre pieds, respectivement antérieur gauche, antérieur droit, postérieur gauche et postérieur droit, le pied antérieur gauche comprenant une jauge de contrainte antérieure gauche (3AG), le pied antérieur droit comprenant une jauge de contrainte antérieure droite (3AD), le pied postérieur gauche comprenant une jauge de contrainte postérieure gauche (3PG) et le pied postérieur droit comprenant une jauge de contrainte postérieure droite (3PD), le dispositif de pesage comprenant en outre une unité de commande électronique (4) et un afficheur (5),
les jauges de contrainte antérieure droite et postérieure droite étant combinées dans un premier montage de type pont de wheatstone (31) avec un première sortie (73) issue d'un premier amplificateur (71), et les jauges de contrainte antérieure gauche et postérieure gauche étant arrangées dans un second montage de type pont de wheatstone (32) présentant un seconde sortie (74) issue d'un second amplificateur (72), les première et deuxième sorties étant raccordées à l'unité de commande électronique pour être numérisées et additionnées, pour en déduire ainsi le poids d'un objet ou d'un individu présent sur le dispositif.

**2.** Dispositif de pesage selon la revendication 1, dans lequel l'unité de commande électronique (4) est configurée pour afficher sur l'afficheur au moins une indication de décentrage de l'utilisateur sur la balance.

**3.** Dispositif de pesage selon l'une des revendications 1 ou 2, dans lequel chaque montage de type pont de wheatstone comprend une première branche (21) comprenant deux résistances de jauge avant (11,12;15,16) montées en série entre une tension de référence (Vs) et un potentiel de masse avec un premier point intermédiaire (51) entre les deux dites résistances de jauge avant, et une seconde branche (22) comprenant deux résistances de jauge arrière (13,14;17,18) montées en série entre la tension de référence et le potentiel de masse avec un second point intermédiaire (52) entre les deux dites résistances de jauge arrière, les premier (51) et second (52) points intermédiaires étant reliés à l'amplificateur (71;72) correspondant, l'un des premier ou second points intermédiaires (51,52) pouvant être en outre relié sélectivement via un commutateur (T1) à une source de tension intermédiaire (Vi), de sorte que lorsque le commutateur (T1) est activé la différence de tension lue entre les premier et second points intermédiaires (51,52) est représentative d'un déséquilibre avant-arrière.

**4.** Dispositif de pesage selon la revendication 3, dans lequel les deux résistances de jauge avant (11,12;15,16) de chaque montage de type pont de wheatstone comprennent une première résistance de jauge avant (11;15) agencée entre le potentiel de masse et le premier point intermédiaire (51) et une deuxième résistance de jauge avant (12;16) agencée entre le premier point intermédiaire (51) et la tension de référence (Vs), et dans lequel les deux résistances de jauge arrière (13,14;17,18) de chaque montage de type pont de wheatstone comprennent une première résistance de jauge arrière (13;17) agencée entre le potentiel de masse et le second point intermédiaire (52) et une deuxième résistance de jauge arrière (14;18) agencée entre le second point intermédiaire (52) et la tension de référence (Vs), la première résistance de jauge avant (11;15) et la première résistance de jauge arrière (13;17) croissant avec la charge alors que la deuxième résistance de jauge avant (12;16) et la deuxième résistance de jauge arrière (14;18) décroissent avec la charge, de sorte que la sensibilité est optimisée.

**5.** Dispositif de pesage selon l'une des revendications 3 à 4, dans lequel l'écran d'affichage inclut quatre flèches de coin (6) correspondant respectivement aux quatre pieds du dispositif, une des quatre flèches pouvant être affichée en cas de décentrage substantiel en direction d'un coin.

**6.** Dispositif de pesage selon l'une des revendications 3 à 5, dans lequel la tension intermédiaire Vi est la moitié de la tension de référence (Vs).

**7.** Procédé mis en oeuvre dans un dispositif de pesage comprenant quatre jauges de contrainte (respectivement antérieure gauche, antérieure droit, postérieur gauche et postérieur droit), une unité de commande électronique (4) et un afficheur (5), les jauges de contrainte antérieure droite et postérieure droite étant combinées dans un premier montage de type pont de wheatstone 31 avec une première sortie (73) issue d'un premier amplificateur (71), et les jauges de contrainte antérieure gauche et postérieure gauche étant combinées dans un second montage de type pont de wheatstone (32) présentant une seconde sortie (74) issue d'un second amplificateur (72), chaque montage de type pont de wheatstone comprenant une première branche (21) comprenant deux résistances de jauge avant (11,12;15,16) en série entre une tension de référence (Vs) et un potentiel de masse avec un premier point intermédiaire (51;53) entre les deux résistances, et une seconde branche (22) comprenant deux résistances de jauge arrière (13,14;17,18) en série entre la tension de référence et le potentiel de masse avec un second point intermédiaire (52;54) entre les deux résistances, les premiers et seconds points intermédiaires étant relié audit amplificateur (71;72), l'un des premier ou second points intermédiaires (51,52;53,54) pouvant être relié sélectivement via un commutateur (T1;T1') à une source de tension intermédiaire (Vi),
le procédé comprenant les étapes :

    **a**- une étape de calibration au cours de laquelle on enregistre une première série de paramètres (P1) pour une pluralité de poids de référence posés successivement sur le dispositif de pesage, et une seconde série de paramètres (P2) pour la pluralité de poids de référence posés successivement sur le dispositif de pesage, avec le commutateur (T1) activé le premier point intermédiaire (51) étant relié à la source de tension intermédiaire (Vi),

**b1-** une étape de pesée au cours de laquelle on mesure, les commutateur (T1,T1') étant ouverts, les première et deuxième sorties (73,74), et on corrige leur somme numérisée obtenue au moyen de la première série de paramètres (P1), pour obtenir un poids estimé,

**b2-** une étape d'évaluation de décentrage au cours de laquelle on active le commutateur (T1;T1') et compare la somme des première et deuxième sorties (73,74) à un point de la deuxième série de paramètres (P2) correspondant au poids estimé, pour identifier un décentrage, et l'indiquer à l'utilisateur,

**c-** on répète les étapes b1- et b2-.

8. Procédé selon la revendication 7, comprenant en outre :

**d-** une étape finale au cours de laquelle on stoppe l'itération des étapes b1- et b2- lorsque l'évaluation du décentrage est inférieur à un seuil prédéterminé pendant au moins une période prédéterminée, puis on affiche le poids estimé en résultant sur l'afficheur.

9. Procédé selon l'une des revendications 7 à 8, dans lequel l'afficheur comporte des flèches de coin, et dans lequel on identifie un décentrage gauche-droit en comparant les première et deuxième sorties (73,74) à l'étape b1-, et on identifie un décentrage avant-arrière en comparant la somme des première et deuxième sorties (73,74) à la deuxième série de paramètres (P2) à l'étape b2-, afin de déterminer s'il y a lieu d'afficher une flèche de coin correspondant à la jauge de contrainte la plus chargée.

10. Procédé selon l'une des revendications 7 à 9, dans lequel on utilise décentrage gauche-droit pour permettre à l'utilisateur de sélectionner un élément affiché sur l'afficheur.

11. Procédé selon l'une des revendications 7 à 10, dans lequel on affiche sur l'afficheur le poids mesuré en fonction de la somme des première et deuxième sorties (73,74) et d'une correction au moyen de la première série de paramètres (P1).

12. Procédé selon l'une des revendications 7 à 11, comprenant en outre :

**b0-** une étape de tare au cours de laquelle on effectue une mesure de poids de tare avec aucun objet posé sur le dispositif et on compense une mesure ultérieure par un décalage offset correspondant au poids de tare.

**Patentansprüche**

1. Wiegevorrichtung des Typs elektronische Personenwaage (1), aufweisend vier Füße, nämlich einen vorderen linken, vorderen rechten, hinteren linken und hinteren rechten, wobei der vordere linke Fuß einen vorderen linken Dehnungsmesser (3AG) aufweist, der vordere rechte Fuß einen vorderen rechten Dehnungsmesser (3AD) aufweist, der hintere linke Fuß einen hinteren linken Dehnungsmesser (3PG) aufweist und der hintere rechte Fuß einen hinteren rechten Dehnungsmesser (3PD) aufweist, wobei die Wiegevorrichtung ferner eine elektronische Steuereinheit (4) und eine Anzeigeeinrichtung (5) aufweist,

wobei der vordere rechte und der hintere rechte Dehnungsmesser in einer ersten Wheatstone-Brückenschaltung (31) verbunden sind, die ein von einem ersten Verstärker (71) ausgegebenes erstes Ausgangssignal (73) hat, und der vordere linke und der hintere linke Dehnungsmesser in einer zweiten Wheatstone-Brückenschaltung (32) verbunden sind, die ein von einem zweiten Verstärker (72) ausgegebenes zweites Ausgangssignal (74) hat, wobei das erste und zweite Ausgangssignal an der elektronischen Steuereinheit bereitgestellt werden, um digitalisiert und addiert zu werden, um daraus das Gewicht eines auf der Vorrichtung vorhandenen Objekts oder Individuums abzuleiten.

2. Wiegevorrichtung nach Anspruch 1, wobei die elektronische Steuereinheit (4) konfiguriert ist, mindestens einen Hinweis, der eine Dezentralität des Benutzers auf der Waage betrifft, auf der Anzeigeeinrichtung anzuzeigen.

3. Wiegevorrichtung nach einem der Ansprüche 1 oder 2, wobei jede Wheatstone-Brückenschaltung einen ersten Zweig (21), der zwei in Reihenschaltung zwischen einer Referenzspannung (Vs) und einem Massepotential angeordnete Vornemesser-Widerstände (11, 12; 15, 16) mit einem ersten Zwischenpunkt (51) zwischen den zwei Vornemesser-Widerständen hat, und einen zweiten Zweig (22), der zwei in Reihenschaltung zwischen der Referenzspannung und dem Massepotential angeordnete Hintenmesser-Widerstände (13, 14; 17, 18) mit einem zweiten Zwischenpunkt (52) zwischen den zwei Hintenmesser-Widerständen hat, aufweist, wobei der erste (51) und zweite (52) Zwischenpunkt mit dem entsprechenden Verstärker (71; 72) verbunden sind, wobei außerdem selektiv entweder der erste oder der zweite Zwischenpunkt (51, 52) über einen Schalter (T1) mit einer Zwischenspannungsquelle (Vi) verbunden werden kann, so dass, wenn der Schalter (T1) aktiviert ist, die zwischen dem ersten und zweiten Zwischenpunkt (51, 52) ausgelesene Differenz ein Vorne-hinten-Ungleichgewicht repräsentiert.

4. Wiegevorrichtung nach Anspruch 3, wobei die zwei Vornemesser-Widerstände (11, 12; 15, 16) jeder Wheatstone-Brückenschaltung einen zwischen dem Massepotential und dem ersten Zwischenpunkt (51) angeordneten ersten Vornemesser-Widerstand (11; 15) und einen zwischen dem ersten Zwischenpunkt (51) und der Referenzspannung (Vs) angeordneten zweiten Vornemesser-Widerstand (12; 16) aufweisen und wobei die zwei Hintenmesser-Widerstände (13, 14; 17, 18) jeder Wheatstone-Brückenschaltung einen zwischen dem Massepotential und dem zweiten Zwischenpunkt (52) angeordneten ersten Hintenmesser-Widerstand (13; 17) und einen zwischen dem zweiten Zwischenpunkt (52) und der Referenzspannung (Vs) angeordneten zweiten Hintenmesser-Widerstand (14; 18) aufweisen,
wobei der erste Vornemesser-Widerstand (11; 15) und der erste Hintenmesser-Widerstand (13; 17) mit der Belastung zunehmen, während der zweite Vornemesser-Widerstand (12; 16) und der zweite Hintenmesser-Widerstand (14; 18) mit der Belastung abnehmen, so dass die Empfindlichkeit optimiert ist.

5. Wiegevorrichtung nach einem der Ansprüche 3 bis 4, wobei der Anzeigebildschirm vier Eckenpfeile (6) aufweist, die jeweils den vier Füßen der Vorrichtung entsprechen, wobei im Falle einer wesentlichen Dezentralität in Richtung einer Ecke einer der vier Pfeile angezeigt werden kann.

6. Wiegevorrichtung nach einem der Ansprüche 3 bis 5, wobei die Zwischenspannung Vi die Hälfte der Referenzspannung (Vs) ist.

7. Verfahren, das in einer Wiegevorrichtung durchgeführt wird, die vier Dehnungsmesser (nämlich einen vorderen linken, vorderen rechten, hinteren linken und hinteren rechten), eine elektronische Steuereinheit (4) und eine Anzeigeeinrichtung (5) aufweist, wobei der vordere rechte und der hintere rechte Dehnungsmesser in einer ersten Wheatstone-Brückenschaltung (31) verbunden sind, die ein von einem ersten Verstärker (71) ausgegebenes erstes Ausgangssignal (73) hat, und der vordere linke und der hintere linke Dehnungsmesser in einer zweiten Wheatstone-Brückenschaltung (32) zusammengestellt sind, die ein von einem zweiten Verstärker (72) ausgegebenes zweites Ausgangssignal (74) hat,
wobei jede Wheatstone-Brückenschaltung einen ersten Zweig (21), der zwei in Reihenschaltung zwischen einer Referenzspannung (Vs) und einem Massepotential angeordnete Vornemesser-Widerstände (11, 12; 15, 16) mit einem ersten Zwischenpunkt (51; 53) zwischen den zwei Widerständen hat,
und einen zweiten Zweig (22), der zwei in Reihenschaltung zwischen der Referenzspannung und dem Massepotential angeordnete Hintenmesser-Widerstände (13, 14; 17, 18) mit einem zweiten Zwischenpunkt (52; 54) zwischen den zwei Widerständen hat, aufweist, wobei der erste und zweite Zwischenpunkt mit dem Verstärker (71; 72) verbunden sind, wobei außerdem selektiv entweder der erste oder der zweite Zwischenpunkt (51, 52; 53, 54) über einen Schalter (T1, T1') mit einer Zwischenspannungsquelle (Vi) verbunden werden kann,
wobei das Verfahren die folgenden Schritte aufweist:

a- einen Kalibrationsschritt, im Verlaufe dessen eine erste Serie von Parametern (P1) für mehrere Referenzgewichte, die nacheinander auf der Wiegevorrichtung angeordnet werden, und eine zweite Serie von Parametern (P2) für die nacheinander auf der Wiegevorrichtung angeordneten mehreren Referenzgewichte registriert werden, wobei der Schalter (T1) aktiviert und der erste Zwischenpunkt (51) mit der Zwischenspannungsquelle (Vi) verbunden ist,
b1- einen Wiegeschritt, im Verlaufe dessen bei geöffneten Schaltern (T1, T1') das erste und zweite Ausgangssignal (73, 74) gemessen werden und ihre gewonnene digitalisierte Summe mit Hilfe der ersten Parameterserie (P1) korrigiert wird, um ein geschätztes Gewicht zu gewinnen,
b2- einen Schritt einer Evaluierung einer Dezentralität, im Verlaufe dessen der Schalter (T1; T1') aktiviert wird und die Summe des ersten und zweiten Ausgangssignals (73, 74) mit einem dem geschätzten Gewicht entsprechenden Punkt der zweiten Parameterserie (P2) verglichen wird, um die Dezentralität zu identifizieren und sie dem Benutzer anzuzeigen,
c- Wiederholen der Schritte b1- und b2.

8. Verfahren nach Anspruch 7, ferner aufweisend:
d- einen Beendigungsschritt, im Verlaufe dessen die Iteration der Schritte b1- und b2 beendet wird, wenn während mindestens eines vorgegebenen Zeitraums die Evaluierung der Dezentralität kleiner als eine vorgegebene Schwelle ist, anschließend das daraus resultierende geschätzte Gewicht auf der Anzeigeeinrichtung angezeigt wird.

9. Verfahren nach einem der Ansprüche 7 bis 8, wobei die Anzeigeeinrichtung Eckenpfeile aufweist, und wobei durch Vergleichen des ersten und des zweiten Ausgangssignals (73, 74) im Schritt b1- eine links-rechts-Dezentralität identifiziert wird und durch Vergleichen der Summe des ersten und zweiten Ausgangssignals (73, 74) mit der zweiten Parameterserie (P2) im Schritt b2- eine vorne-hinten-Dezentralität identifiziert wird, um zu bestimmen, ob gegebenenfalls ein zugehöriger Eckenpfeil des am stärksten belasteten Dehnungsmessers anzuzeigen ist.

10. Verfahren nach einem der Ansprüche 7 bis 9, wobei eine links-rechts-Dezentralität verwendet wird, um dem Benutzer zu erlauben, ein auf der Anzeigeeinrichtung angezeigtes Element zu wählen.

11. Verfahren nach einem der Ansprüche 7 bis 10, wobei auf der Anzeigeeinrichtung das Gewicht angezeigt wird, das als Funktion der Summe des ersten und zweiten Ausgangssignals (73, 74) und einer Korrektur mit Hilfe der ersten Parameterserie (P1) gemessen ist.

12. Verfahren nach einem der Ansprüche 7 bis 11, ferner aufweisend:
b0- einen Taraschritt, in welchem eine Taragewichtsmessung, bei der kein Objekt auf der Vorrichtung angeordnet ist, durchgeführt wird, und eine spätere Messung mit einer dem Taragewicht entsprechenden Offset-Verschiebung kompensiert wird.

**Claims**

1. Weighing device of electronic scale type (1), including four feet, respectively, left front, right front, left rear and right rear, where the left-front foot includes a left-front strain gauge (3AG), the right-front foot includes a right-front strain gauge (3AD), the left-rear foot includes a left-rear strain gauge (3PG) and the right-rear foot includes a right-rear strain gauge (3PD), the weighing device furthermore includes an electronic control unit (4) and a display (5),
where the right-front and right-rear strain gauges are combined in a first circuit with a first Wheatstone bridge (31) with a first output (73) of a first amplifier (71), and the left-front and left-rear strain gauges are arranged in a second circuit with a second Wheatstone bridge (32) with a second output (74) from a second amplifier (72), and wherein the first and second outputs are connected to the electronic control unit to be digitized and added and for thus deducing therefrom the total weight of an object present on the device.

2. Weighing device according to claim 1, in which the electronic control unit (4) is configured for displaying on the display at least one indication of an off-center condition of the user on the scale.

3. Weighing device according to any of the claims 1 to 2, in which each Wheatstone bridge type circuit includes **a first branch** (21) comprising two front gauge resistors (11,12;15,16) arranged in series between a reference voltage (Vs) and a ground potential with a first intermediate point (51) between the two front gauge resistors, and **a second branch** (22) comprising two rear gauge resistors (13,14;17,18) arranged in series between the reference voltage and the ground potential with a second intermediate point (52) between the two rear gauge resistors, where the first and second intermediate points (51,52) are connected selectively connected via a **switch** (T1) to an intermediate voltage source (Vi), such that when the switch (T1) is activated, the voltage difference measured between the first and second intermediate points (51,52) is representative of a front-rear imbalance.

4. Weighing device according to claim 3, in which the two front gauge resistors (11,12;15,16) of each Wheatstone bridge type circuit include a front-gauge first resistor (11;15) arranged between the ground potential and the first intermediate point (51) and a front-gauge second resistor (12;16) arranged between the first intermediate point (51) and the reference voltage (Vs), and in which the two rear gauge resistors (13,14;17,18) of each Wheatstone bridge type circuit include a rear-gauge first resistor (13;17) arranged between the ground potential and the second intermediate point (52) and a rear-gauge second resistor (14;18) arranged between the second intermediate point (52) and the reference voltage (Vs),
where the front-gauge first resistor (11;15) and the rear-gauge first resistor (13;17) **increase** with the load whereas the front-gauge second resistor (12;16) and the rear-gauge second resistor (14;18) **decrease** with the load, such that sensitivity is improved.

5. Weighing device according to any of the claims 3 to 4, in which the display includes four **corner arrows** (6) corresponding respectively to the four feet of the device, where one of the four arrows can be displayed in case of being substantially off-center towards one corner.

6. Weighing device according to any of the claims 3 to 5, in which the **intermediate voltage** (Vi) is half of the reference voltage (Vs).

7. **Method** implemented in a weighing device comprising four strain gauges, respectively front left, front right, rear left and rear right, an electronic control unit and a display (5), where the right-front and right-rear strain gauges are combined in a first Wheatstone bridge type circuit (31) with a first output (73) coming from a first amplifier (71) and the left-front and left-rear strain gauges are arranged in a second Wheatstone bridge type circuit (32) with a second output (74) coming from a second amplifier (72),
each Wheatstone bridge type circuit including a **first branch** (21) comprising two front gauge resistors (11,12;15,16) in series between a reference voltage (Vs) and a ground potential with a first intermediate point (51 ;53) between the two resistors, and a **second branch** (22) comprising two rear gauge resistors (13,14;17,18) arranged in series between the reference voltage and the ground potential with a second intermediate point (52;54) between the two resistors, where the first and second intermediate points are connected to said amplifier (71;72), and where one of the first and/or second intermediate points (51,52;53,54) can be selectively connected to an intermediate voltage source (Vi) via a switch (T1 ;T1'),
the method comprising the steps:

    **a-** a **calibration step** during which a first series of parameters (P1) is recorded for a plurality of reference weights placed successively on the weighing device, and a second series of parameters (P2) for the plurality of reference weights placed successively on the weighing device with one of the first and/or second intermediate points coupled to the intermediate voltage source (Vi);
    **b1-** a **weighing step** during which the first and second outputs (73,74) are measured with the switches (T1 ;T1') at OFF state, and the resulting digitized total corrected by means of the first series of parameters (P1), in order to obtain an estimated weight;
    **b2-** an **off-center evaluation step** during which the switch (T1 ;T1') is activated, and the sum of first and second outputs (73,74) are compared to one point of the second series of parameters (P2) corresponding to the estimated weight, in order to identify an off-center condition and indicate it to the user;
    **c-** steps b1- and b2- are repeated.

8. Method according to claim 7, additionally comprising:
    **d-** a final step during which the iteration of steps b1- and b2- is stopped when the evaluation of an off-center distance is less than a preset threshold during at least a preset time and then the resulting estimated weight is displayed on a display.

9. Method according to any of the claims 7 to 8, in which the display comprises corner arrows and in which a left-right off-center condition is identified by comparing the first and second outputs (73,74) from step **b1-** and a front-rear off-center condition is identified by comparing the sum of the first and second outputs (73,74) to the second series of parameters (P1) in step **b2-** in order to determine whether it is necessary to display a corner arrow corresponding to the more heavily loaded strain gauge.

10. Method according to any of the claims 7 to 9, in which the user selects an element on the display by standing intentionally off-center left-right.

11. Method according to any of the claims 7 to 10, in which the measured weight is displayed on the display as a function of the sum of the first and second outputs (73,74) corrected by means of the first series of parameters (P1).

12. Method according to any of the claims 7 to 11, additionally comprising:
    **b0-** a taring step during which a tare measurement is done with no object placed on the device and a subsequent weight measurement is compensated by an offset corresponding to the tare weight.

# FIG. 1

# FIG. 2

52.3 Kg

**FIG. 3**

**FIG. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5724267 A

- US 3906931 A